# FASCICULE DE BREVET EUROPEEN

(11) **EP 2 386 169 B1**
(45) Date de publication et mention de la délivrance du brevet: **28.11.2012**
(21) Numéro de dépôt: 10706698.7
(22) Date de dépôt: 08.01.2010
(51) Int. Cl.: H04W 8/30, H04W 60/02, H04L 29/06

(54) **Procédé et système de regulation du trafic de redémarrage dans un réseau de télécommunications**
Verfahren und System zum Steuern des Neustarts von Verkehr in einem Telekommunikationsnetzwerk
Method and system for controlling the restart traffic in a telecommunication network

(30) Priorité: 08.01.2009 FR 0950082
(43) Date de publication de la demande: 16.11.2011
(73) Titulaire: France Télécom, 75015 Paris (FR)
(72) Inventeur: LE ROUZIC, Jean-Claude, F-22560 Trebeurden (FR); TUFFIN, Stéphane, F-22300 Rospez (FR)
(86) Numéro de dépôt international: PCT/FR2010/050025
(87) Numéro de publication internationale: WO 2010/079307

(56) Documents cités:
- DONOVAN J ROSENBERG CISCO SYSTEMS S: "Session Timers in the Session Initiation Protocol (SIP); rfc4028.txt" IETF STANDARD, INTERNET ENGINEERING TASK FORCE, IETF, CH, 1 avril 2005 (2005-04-01) , XP015041971 ISSN: 0000-0003
- ANDREW S. TANENBAUM: "Computer networks" 2003, PEARSON EDUCATION INTERNATIONAL , NJ, USA , XP002529347 page 255 - page 258
- ROSENBERG DYNAMICSOFT J: "The Session Initiation Protocol (SIP) UPDATE Method; rfc3311.txt" IETF STANDARD, INTERNET ENGINEERING TASK FORCE, IETF, CH, 1 septembre 2002 (2002-09-01), XP015009088 ISSN: 0000-0003

## Description

La présente invention concerne les moyens mis en place dans un réseau de télécommunications en prévision d'une panne partielle ou globale du réseau. Elle concerne notamment (mais pas exclusivement) les réseaux, par exemple de type IP (*"Internet Protocol*"), aptes à mettre en oeuvre des protocoles évolués de contrôle de session tels que H.323 ou SIP ("*Session Initiation Protocol*").

Les réseaux IP permettent la diffusion de données conversationnelles ("Voix sur IP", "Partage de Contenu", "Présence", "Messagerie Instantanée", et ainsi de suite).

Comme expliqué dans l'encyclopédie en ligne "Wikipédia", le sigle "H.323 regroupe un ensemble de protocoles de communication de la voix, de l'image et de données sur IP". Ces protocoles ont été mis au point par l'UIT-T. Ces protocoles "peuvent être regroupés en trois catégories : la signalisation, la négociation de codec [codeur-décodeur], et le transport de l'information."

Le protocole SIP a été défini par l'IETF dans le document RFC 3261. Ce protocole permet l'établissement, la modification et la terminaison de sessions multimédia dans un réseau utilisant le protocole IP. Le protocole SIP permet également des procédures de notification d'événements et l'envoi d'informations en dehors du contexte d'une session. Il est largement utilisé pour des commandes de services de messagerie instantanée. Ainsi, dans un environnement SIP, il existe différents types de communications telles que des requêtes d'établissement de sessions et des requêtes échangées hors de tout dialogue.

Ces protocoles évolués de contrôle de session utilisent notamment des messages dits "de signalisation", qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière. Le RFC 4028 décrit un système pour définir des minuteurs pour le protocole SIP.

L'invention concerne notamment (mais pas exclusivement) les infrastructures de type IMS (*"IP Multimedia Subsystem"*). L'IMS a été défini par les organismes de normalisation 3GPP (*"3rd Generation Partnership Project*") et TISPAN (*"Telecommunications and Internet Converged Services and Protocols for Advanced Networking*"). C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux multimédias. Elle gère aussi l'interaction de services. L'IMS permet actuellement d'accéder à des services de type téléphonie, visiophonie, présence et messagerie instantanée.

Lorsqu'un utilisateur souhaite bénéficier des services offerts par un réseau IP tel que ceux décrits ci-dessus, il émet vers le réseau des messages de signalisation pouvant inclure notamment divers types de requêtes.

Tout d'abord, le terminal de l'utilisateur doit s'enregistrer sur le réseau. Lorsque le réseau est incapable de faire le lien entre cet enregistrement et un enregistrement précédent (par exemple suite à une panne réseau ou suite à un arrêt du terminal pendant une durée supérieure à une durée d'expiration prédéterminée), l'enregistrement est considéré comme étant un enregistrement initial. Après un enregistrement initial, le terminal de l'utilisateur doit périodiquement (par exemple, toutes les heures) envoyer au réseau une requête pour confirmer qu'il souhaite maintenir son enregistrement ; on appellera "période de rafraîchissement d'enregistrement" cet intervalle temporel entre deux telles requêtes.

Par ailleurs, quand le réseau met en oeuvre le protocole SIP, les terminaux des usagers peuvent, en envoyant une requête correspondante, souscrire à certains services. Il peut s'agir d'un service de notification d'évènement : par exemple, lorsque l'utilisateur dispose d'une boîte vocale sur le réseau, son terminal peut souscrire à une notification de dépôt de message, c'est-à-dire qu'il peut demander à être informé chaque fois qu'un message a été enregistré sur cette boîte vocale ; le terminal de l'utilisateur peut par ailleurs demander à être notifié de son état d'enregistrement. Il peut également souscrire à un service de notification de présence, qui lui permet de recevoir des informations publiées par un autre utilisateur qu'il a désigné, et ainsi de suite.

Après la requête de souscription initiale, le terminal doit périodiquement envoyer au réseau une requête pour renouveler sa souscription ; on appellera "période de rafraîchissement de souscription" cet intervalle temporel entre deux telles requêtes.

Les divers états du système terminal-réseau requérant un rafraîchissement périodique sont communément désignés par le terme anglais *"soft-states"*. Les normes en vigueur imposent aux terminaux de gérer des temporisateurs leur permettant d'envoyer les requêtes de rafraîchissement d'enregistrement ou de souscription de manière automatique.

Lorsqu'un utilisateur s'enregistre (qu'il s'agisse d'un enregistrement initial ou d'un rafraîchissement) sur le réseau à partir d'un terminal, le réseau indique au terminal la période de rafraîchissement d'enregistrement souhaitée par l'opérateur du réseau. Cette période de rafraîchissement d'enregistrement indiquée au terminal est inférieure ou égale à une durée de bail d'enregistrement (appelée "Expires") mise en oeuvre au niveau du coeur de réseau ; le document RFC 3261 mentionné ci-dessus préconise une durée de bail d'enregistrement égale à 3600 secondes.

Après s'être enregistré initialement, un terminal peut, comme expliqué ci-dessus, souscrire à certains services (par exemple à une notification de dépôt de message, ou à une notification de présence, ou encore à une notification d'état d'enregistrement). Les requêtes de souscription initiales sont émises soit de manière automatique juste après l'enregistrement initial, soit suite à une action de l'utilisateur sur l'interface du terminal. Pour chaque souscription (qu'il s'agisse d'une souscription initiale ou d'un rafraîchissement), le réseau indique au terminal la période de rafraîchissement souhaitée par l'opérateur du réseau pour cette souscription. Dans le cas du document RFC 3265, la période de rafraîchissement de souscription maximale mise en oeuvre par le coeur de réseau est définie par renvoi à la partie appelée *"event-package"* du document définissant le type de souscription ; par exemple, concernant la souscription à la notification de dépôt de message, le document RFC 3842 préconise (voir *"event-package message summary"*) une période de rafraîchissement allant de quelques heures à quelques jours.

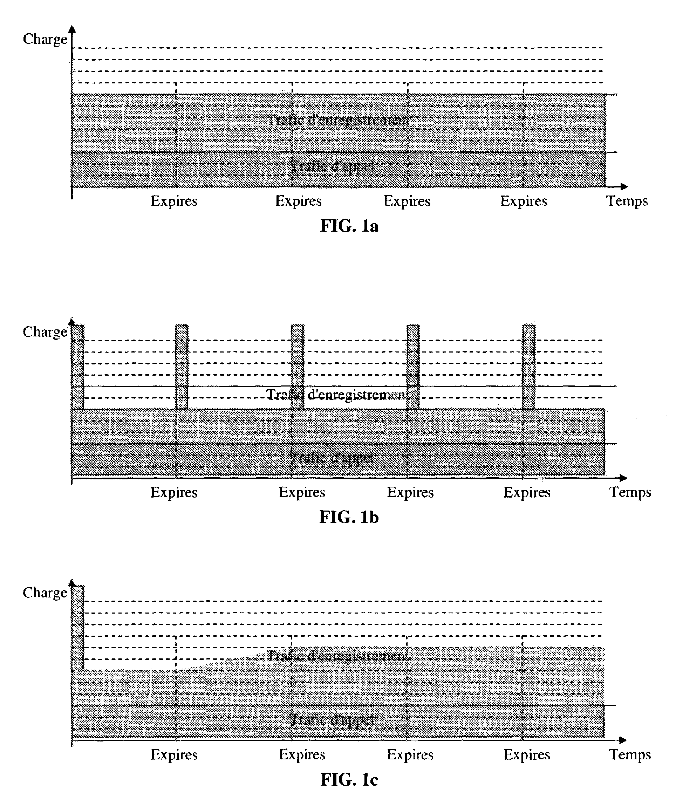

Dans ce contexte, pendant le fonctionnement normal du réseau, ce dernier reçoit des requêtes d'enregistrement initial et de souscription initiale, et des requêtes de rafraîchissement d'enregistrement et de souscription, au fur et à mesure que les usagers du réseau se connectent puis renouvellent leur enregistrement et leurs souscriptions au bout des périodes de rafraîchissement respectives prévues. La capacité de traitement des noeuds du réseau est évidemment prévue pour faire face à la fréquence de requêtes correspondante, notamment en fonction du nombre habituel d'usagers du réseau. Dans de nombreux cas, et en particulier dans le cas des réseaux et services dits *"always-on"*, le taux de reconnexion et donc le taux d'enregistrements initiaux et de souscriptions initiales en fonctionnement normal est particulièrement bas. Cette situation est illustrée sur la **figure 1a****.**

Mais des difficultés particulières se présentent en cas de panne partielle ou globale du réseau.

En effet, quand une panne de réseau intervient, les terminaux connectés au noeud ou lien en panne cherchent tous à effectuer un enregistrement initial suivi d'une ou plusieurs souscriptions initiales. Le rythme auquel les terminaux cherchent à effectuer un enregistrement initial dépend de la programmation des terminaux. Par exemple, les terminaux de type "LiveBox" commercialisés par France Télécom sont actuellement programmés pour tenter de s'enregistrer toutes les 4 minutes. Ainsi, les terminaux appliquent une période de temporisation, qui est habituellement comprise entre quelques dizaines de secondes et quelques minutes et beaucoup plus courte que la période de rafraîchissement d'enregistrement, ce qui entraîne un rythme anormalement élevé de tentatives d'enregistrement. Dans d'autres cas, c'est une action de l'utilisateur sur l'interface du terminal qui déclenche la tentative d'enregistrement.

Pour un terminal donné, la durée pendant laquelle ce terminal doit, suite à une panne du réseau, attendre avant d'être à nouveau enregistré est donc en moyenne une fonction croissante de sa période de temporisation. En disant "en moyenne", on se réfère au fait que, pour un terminal donné, cette durée dépend également du moment auquel ce terminal tente de s'enregistrer par rapport au moment où la panne prend fin. En effet, si par chance il tente de s'enregistrer juste après la fin de la panne, et à supposer que le réseau ne soit pas surchargé, il va réussir à s'enregistrer quasiment à coup sûr ; si en revanche, il tente de s'enregistrer juste avant la fin de la panne, il va attendre toute la période de temporisation avant de tenter à nouveau de s'enregistrer.

Ainsi, dans l'état de l'art, lors du redémarrage du réseau, les terminaux envoient leurs requêtes d'enregistrement respectives de manière légèrement décalée les unes par rapport aux autres. Pendant une durée de l'ordre de la période de temporisation moyenne, le réseau doit alors faire face à un afflux anormalement élevé de requêtes, et ce d'autant plus que la panne dure longtemps. De plus, en supposant que le réseau soit capable de traiter ce trafic de redémarrage, il devra faire face à un nouvel afflux de requêtes issus des mêmes terminaux au bout de la période de rafraîchissement d'enregistrement. Cette situation est illustrée sur la **figure 1b**.

Mais l'hypothèse selon laquelle le réseau est capable de traiter toutes les requêtes de signalisation lors du redémarrage s'avère souvent être fausse en pratique. En effet, chaque noeud du réseau traite, en fonction de sa capacité (qui peut varier d'un noeud à l'autre), les premières requêtes qu'il reçoit ; ce faisant, le niveau de charge des noeuds du réseau augmente rapidement jusqu'à, bien souvent, atteindre la surcharge. Dans ces conditions, un ou plusieurs noeuds du réseau (notamment dans le coeur de réseau) n'arrivent plus à satisfaire à temps à toutes les requêtes. Plus précisément, pour les terminaux dont la requête n'a pu être traitée :
● soit ces terminaux reçoivent une réponse d'échec du réseau,
● soit ces terminaux ne reçoivent aucune réponse dans un temps imparti (64 · *T*₁, soit 32 secondes si *T*₁ = 500 ms selon le document RFC 3261), et ils en déduisent que leur requête d'enregistrement a échoué.

Ces terminaux vont alors effectuer des tentatives d'enregistrement successives, mutuellement séparées par ladite période de temporisation, jusqu'à ce qu'ils réussissent finalement à se connecter ou se reconnecter (ou abandonnent...).

On observe donc, suite à une panne dans les systèmes de télécommunications connus, à la fois une saturation du réseau et une longue attente de la part d'un certain nombre de terminaux pour pouvoir se connecter ou se reconnecter.

On connaît divers procédés de gestion des pannes dans un réseau de télécommunications.

Par exemple, la proposition affichée sur http://tools.ietf.org/html/draft-ietf-sip-outbound-16#section-4.5 définit un algorithme de temporisation destiné à être mis en oeuvre par un terminal qui a subi un échec lors d'une tentative d'enregistrement initial ou de rafraîchissement d'enregistrement. Selon cet algorithme, la durée d'attente observée par le terminal dépend non seulement de la période de rafraîchissement d'enregistrement, mais également du nombre d'échecs d'enregistrement consécutifs (plus précisément, il est prévu que la période de temporisation double à chaque fois que le terminal subit un nouvel échec dans sa tentative d'enregistrement, sous réserve de ne pas dépasser la période de rafraîchissement d'enregistrement).

Or les procédés de gestion des pannes connus sont loin d'être optimaux. En effet :
1) la durée de la période de temporisation est choisie par le terminal ou par l'utilisateur, au lieu d'être indiquée par le réseau ; or les terminaux utilisés pour accéder aux services proposés par un opérateur réseau ne sont pas nécessairement programmés par l'opérateur concerné, qui ne peut donc pas programmer ces terminaux selon ses besoins ;
2) il n'est pas prévu de distinguer entre les différents types de requêtes (enregistrement, souscription à une notification d'évènement, souscription à une notification de présence, et ainsi de suite) ; par conséquent, le risque de congestion est évalué en fonction de l'ensemble des requêtes dont on prévoit qu'elles seront émises suite à un redémarrage ; or, pour l'opérateur du réseau, il est moins prioritaire de satisfaire les requêtes de souscription que de permettre à tous les usagers qui le souhaitent de pouvoir s'enregistrer.

La présente invention concerne donc un procédé de régulation du trafic dans un réseau de télécommunications, comprenant les étapes suivantes :
- suite à la réception par le réseau d'une requête d'enregistrement initial, et dans le cas où le réseau est capable de traiter ladite requête d'enregistrement initial, il prescrit au terminal émetteur de la requête une période de rafraîchissement d'enregistrement choisie aléatoirement entre une valeur minimale et une valeur maximale prédéterminées, et
- suite à la réception par le réseau d'une requête de rafraîchissement d'enregistrement, il prescrit au terminal émetteur de la requête une période de rafraîchissement d'enregistrement égale à la valeur prévue pour le fonctionnement normal du réseau.

On obtient ainsi un étalement efficace des requêtes de rafraîchissement d'enregistrement sur le réseau suite, le cas échéant, à une panne, ce qui permet d'éviter que les requêtes de rafraîchissement ne provoquent périodiquement des pointes de trafic mettant en danger la capacité de traitement du réseau. On notera que le mécanisme selon l'invention est avantageusement indépendant de la programmation des terminaux.

On pourra par exemple prendre ladite valeur minimale égale à ladite valeur normale, et ladite valeur maximale égale au double de cette valeur normale.

Selon des caractéristiques particulières :
- suite à la réception par le réseau d'une requête de souscription initiale d'un certain type, et dans le cas où le réseau est capable de traiter ladite requête de souscription initiale, il prescrit au terminal émetteur de la requête une période de rafraîchissement de souscription choisie aléatoirement entre une valeur minimale et une valeur maximale prédéterminées, et
- suite à la réception par le réseau d'une requête de rafraîchissement de souscription, il prescrit au terminal émetteur de la requête une période de rafraîchissement de souscription dudit type égale à la valeur prévue pour le fonctionnement normal du réseau.

Grâce à ces dispositions, on peut également étaler les requêtes de souscription, de manière à éviter la congestion du réseau suite à une panne. L'étalement du trafic de signalisation global lors du redémarrage n'est ainsi affecté par le trafic de requêtes de souscription que dans une mesure ajustable par l'opérateur du réseau via le réglage des intervalles temporels pour le premier rafraîchissement respectivement pour chaque type de souscription (notification de dépôt de message, notification de présence, notification d'état d'enregistrement, et ainsi de suite). Ce réglage pourra notamment tenir compte du trafic de requêtes respectif pour chaque type de souscription en fonctionnement normal.

On pourra par exemple prendre ladite valeur minimale égale à ladite valeur normale pour le type de souscription considéré, et ladite valeur maximale égale au double de cette valeur normale.

Corrélativement, l'invention concerne un système de régulation du trafic dans un réseau de télécommunications, possédant des moyens pour :
- suite à la réception par le réseau d'une requête d'enregistrement initial, et dans le cas où le réseau est capable de traiter ladite requête d'enregistrement initial, prescrire au terminal émetteur de la requête une période de rafraîchissement d'enregistrement choisie aléatoirement entre une valeur minimale et une valeur maximale prédéterminées, et
- suite à la réception par le réseau d'une requête de rafraîchissement d'enregistrement, prescrire au terminal émetteur de la requête une période de rafraîchissement d'enregistrement égale à la valeur prévue pour le fonctionnement normal du réseau.

Selon des caractéristiques particulières, ledit système de régulation du trafic comprend en outre des moyens pour :
- suite à la réception par le réseau d'une requête de souscription initiale d'un certain type, et dans le cas où le réseau est capable de traiter ladite requête de souscription initiale, prescrire au terminal émetteur de la requête une période de rafraîchissement de souscription choisie aléatoirement entre une valeur minimale et une valeur maximale prédéterminées, et
- suite à la réception par le réseau d'une requête de rafraîchissement de souscription, prescrire au terminal émetteur de la requête une période de rafraîchissement de souscription dudit type égale à la valeur prévue pour le fonctionnement normal du réseau.

On pourra par exemple prendre ladite valeur minimale égale à ladite valeur normale pour le type de souscription considéré, et ladite valeur maximale égale au double de cette valeur normale.

Les avantages offerts par ces systèmes de régulation du trafic sont essentiellement les mêmes que ceux offerts par les procédés corrélatifs succinctement exposés ci-dessus.

En particulier, lorsque l'infrastructure dudit réseau de télécommunications est de type IMS, lesdits moyens peuvent être avantageusement compris dans une fonction "REGISTRAR".

On notera qu'il est possible de réaliser le système de régulation du trafic succinctement décrit ci-dessus dans le contexte d'instructions logicielles et/ou dans le contexte de circuits électroniques.

L'invention vise également un noeud de réseau de télécommunications, par exemple un ordinateur-serveur, faisant partie d'un système de régulation du trafic tel que décrit succinctement ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés de régulation du trafic succinctement exposés ci-dessus, lorsqu'il est exécuté sur un ordinateur.

Les avantages offerts par ce noeud et par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1a, déjà décrite, est un graphique représentant schématiquement la charge d'un réseau de télécommunications en fonctionnement normal,
- la figure 1b, déjà décrite, est un graphique représentant schématiquement la charge du réseau lors du redémarrage du trafic suite à une panne, selon l'art antérieur,
- la figure 1c est un graphique représentant schématiquement la charge du réseau lors du redémarrage du trafic suite à une panne, selon un mode de réalisation de la présente invention, et
- la figure 2 représente schématiquement un système pour la fourniture de services multimédia apte à mettre en oeuvre l'invention.

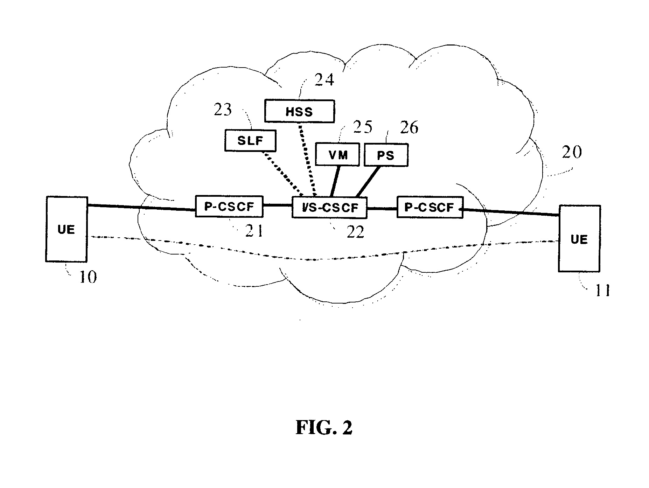

Le système illustré sur la **figure 2** est fondé sur une architecture de réseau de type IMS, tel que présenté succinctement ci-dessus. Les services multimédia offerts par un tel système peuvent comprendre des services de téléphonie, de vidéo-téléphonie, de partage de contenu ("*content-sharing*" en anglais), de présence, de messagerie instantanée, ou de télévision. Ces services sont à la disposition de l'utilisateur d'un terminal UE (pour "*User Equipment*" en anglais) 10 sur un réseau 20 comprenant une infrastructure de transport IP et des serveurs IMS à travers lesquels le terminal 10 peut échanger des messages de signalisation SIP et des flux multimédias notamment avec un autre terminal UE 11, les terminaux 10 et 11 s'étant au préalable enregistrés auprès des serveurs IMS du réseau 20.

Les terminaux 10 et 11 sont des terminaux fixes ou mobiles disposant de moyens de signalisation SIP et pouvant comprendre des moyens de restitution d'un contenu audiovisuel.

Comme le montre la figure 2, ce système de fourniture de services s'appuie sur un réseau 20 conforme à l'architecture IMS définie au 3GPP, et qui comprend :
● une infrastructure de transport IP (non représentée) ;
● un ou plusieurs serveurs de routage I/S-CSCF (pour la combinaison d'une fonction "*Interrogating-Call Server Control Function*" et d'une fonction "*Serving-Call Server Control Function*" dans le même serveur) ; un serveur de routage I/S-CSCF 22 gère notamment la procédure d'enregistrement du terminal 10 dans le réseau 20, le routage de la signalisation entre le terminal 10 et les serveurs d'applications de messagerie vocale VM 25 et de présence PS 26 hébergeant les services souscrits par l'utilisateur du terminal 10, ainsi que le routage en direction d'autres terminaux gérés par le même réseau IMS (comme par exemple le terminal 11) et le routage de la signalisation entre ce réseau IMS 20 et d'autres réseaux (non-représentés) ;
● un ou plusieurs serveurs mandataires P-CSCF (pour "*Proxy-Call Server Control Function*") ; un serveur mandataire P-CSCF 21 est le point de contact SIP du terminal 10 dans le réseau IMS ; ainsi, toute la signalisation SIP échangée entre le terminal 10 et le serveur de routage I/S-CSCF 22 gérant le terminal 10 passe par ce serveur mandataire P-CSCF 21 ;
● un ou plusieurs serveurs de base de données, de type HSS (pour "*Home Subscriber Server*") ; un serveur HSS 24 contient le profil de l'utilisateur du terminal 10 en termes de données d'authentification, de localisation et de services souscrits ;
● optionnellement, un serveur de type SLF (pour "*Subscriber Location Function"*) ; un serveur SLF 23 est utilisé dans les réseaux contenant plusieurs serveurs HSS ; ce serveur SLF 23 est interrogé par les fonctions I-CSCF et S-CSCF pour trouver l'adresse du serveur HSS 24 hébergeant les données de l'utilisateur du terminal 10 ;
● un ou plusieurs serveurs d'application de messagerie vocale VM ; un serveur VM 25 gère la messagerie vocale de l'utilisateur du terminal 10 ; en particulier, le serveur VM 25 gère la souscription du terminal 10 aux événements de dépôt/consultation des messages de l'utilisateur de ce terminal, et notifie le terminal 10 lors de l'occurrence de ces événements ; et
● un ou plusieurs serveurs d'application de présence PS ; un serveur PS 26 gère notamment la souscription du terminal 10 aux événements de présence que l'utilisateur de ce terminal souhaite surveiller, et notifie le terminal lors de l'occurrence de ces événements.

Le serveur de base de données HSS 24 est notamment interrogé :
● par la fonction I-CSCF lors de l'enregistrement du terminal 10 afin d'allouer un serveur I/S-CSCF 22 à l'utilisateur de ce terminal ou de retrouver le serveur I/S-CSCF 22 déjà alloué à cet utilisateur ;
● par la fonction S-CSCF lors de l'enregistrement initial du terminal 10 afin de télécharger les données concernant les services souscrits par cet utilisateur, dont notamment les points de détection qui permettront au serveur I/S-CSCF 22 de déterminer quel message de signalisation il doit acheminer vers quel serveur d'application (comme par exemple VM 25 et PS 26) ;
● par la fonction S-CSCF lors des enregistrements de l'utilisateur du terminal 10, afin d'informer le serveur HSS 24 de l'installation ou de la prolongation d'un enregistrement de cet utilisateur sur le serveur I/S-CSCF 22 ; et
● par la fonction S-CSCF, afin de récupérer les informations nécessaires à l'authentification de la signalisation émise par l'utilisateur du terminal 10.

Le terminal 10 doit être obligatoirement enregistré dans le réseau 20 pour que l'utilisateur de ce terminal puisse utiliser les services fournis par le réseau 20 à partir de ce terminal. La procédure d'enregistrement initial du terminal 10 auprès du réseau 20 est normalement exécutée lors du démarrage du terminal (ou d'une application installée sur ce terminal) par l'utilisateur. Un enregistrement a une durée de validité qui est limitée dans le temps. En condition de fonctionnement normal, le terminal 10 doit renouveler son enregistrement automatiquement et périodiquement. Comme indiqué ci-dessus, les requêtes de maintien d'enregistrement sont appelées ici "rafraîchissements d'enregistrement". Dans le cadre du protocole SIP, les procédures d'enregistrement utilisent une requête appelée "SIP REGISTER".

Certains services comme ceux du serveur VM 25 et du serveur PS 26 s'appuient sur la souscription du terminal 10 à des événements (par exemple de dépôt/consultation de message, ou de présence). La procédure de souscription initiale du terminal 10 auprès du réseau 20 est normalement exécutée lors du démarrage du terminal (ou d'une application installée sur ce terminal) par l'utilisateur, juste après la procédure d'enregistrement initial. Une procédure de souscription initiale est exécutée pour chaque type d'événement souscrit (par exemple, la souscription initiale aux événements de dépôt/consultation de message est effectuée indépendamment de la souscription initiale aux événements de présence). Une souscription a une durée limitée dans le temps. Cette durée peut être différente pour chaque type d'événement souscrit, et elle est également indépendante de la durée de bail d'enregistrement. Dans des conditions de fonctionnement normal, le terminal 10 doit renouveler sa ou ses souscriptions à des événements automatiquement et périodiquement. Comme indiqué ci-dessus, les requêtes de maintien de souscription sont appelées ici "rafraîchissements de souscription". Dans le cadre du protocole SIP, les procédures de souscription à des événements utilisent une requête appelée "SIP SUBSCRIBE".

Différents types de panne peuvent rendre indisponibles les services fournis par le réseau 20 à l'utilisateur du terminal 10. En particulier:
● les pannes de type "A" ayant pour conséquence une perte des données associées à l'enregistrement du terminal 10 au niveau du serveur P-CSCF 21 ou du serveur I/S-CSCF 22 ou du serveur HSS 24 ;
● les pannes de type "B" ayant pour conséquence le blocage de la transmission de la signalisation entre le terminal 10 et le serveur P-CSCF 21, ou entre le serveur P-CSCF 21 et le serveur I/S-CSCF 22, ou entre le serveur I/S-CSCF 22 et le serveur SLF 23, ou entre le serveur I/S-CSCF 22 et le serveur HSS 24 (il s'agit ici essentiellement de l'infrastructure de transport IP du réseau 20).
Pour les pannes de type "A" aussi bien que les pannes de type "B", un terminal 10 va tenter de rafraîchir son enregistrement pendant la panne si la durée de cette panne est supérieure ou égale à la période de rafraîchissement d'enregistrement du terminal 10 ; d'autre part, pour les durées de pannes plus courtes que la période de rafraîchissement d'enregistrement, la probabilité qu'un terminal tente de rafraîchir son enregistrement pendant la panne est donnée par la durée de la panne divisée par la période de rafraîchissement d'enregistrement (on fait l'hypothèse d'une répartition régulière des terminaux au cours d'une période de rafraîchissement d'enregistrement).

Dans les cas précités, ainsi que dans le cas d'un échec d'enregistrement initial causé par une panne de réseau, le terminal 10 va retenter de s'enregistrer auprès du réseau 20 jusqu'à ce qu'un enregistrement réussisse. Comme expliqué ci-dessus, le terminal 10 met classiquement en oeuvre, pour ce faire, un algorithme prescrivant une période de temporisation que le terminal doit observer avant de tenter à nouveau de s'enregistrer, cette période de temporisation ayant une durée inférieure ou égale à la période de rafraîchissement d'enregistrement.

On comprendra que, pour une durée de panne donnée, l'importance du trafic de signalisation qu'un noeud réseau affecté par la panne doit traiter au moment où la panne est réparée est une fonction décroissante de ladite période de temporisation.

Comme déjà mentionné ci-dessus, les algorithmes connus mis en oeuvre dans les terminaux après un échec d'enregistrement présentent les inconvénients suivants.

Lorsque l'opérateur du réseau 20 n'a pas la maîtrise de ces algorithmes (par exemple dans le cas de terminaux achetés par les utilisateurs "sur étagère", ou dans le cas de terminaux dont les mises-à-jour logicielles ne sont pas contrôlées par l'opérateur), l'opérateur n'est pas en mesure d'optimiser le dimensionnement des noeuds de son réseau, et il ne peut pas s'engager sur le niveau de disponibilité des services rendus par le réseau 20 à ses utilisateurs.

Un deuxième inconvénient est qu'il n'est prévu aucun moyen pour dissocier l'émission par les terminaux d'une requête "SIP REGISTER" initiale de l'émission d'une requête "SIP SUBSCRIBE" initiale (habituellement consécutive à une requête "SIP REGISTER" initiale), y compris lorsque cette requête "SIP REGISTER" initiale fait suite à plusieurs tentatives d'enregistrement infructueuses.

La présente invention concerne les requêtes d'enregistrement initial traitées par le réseau. En effet, après la fin d'une panne, il se peut que, durant une certaine période, le réseau soit saturé et donc incapable de traiter à temps certaines requêtes d'enregistrement reçues durant cette période de redémarrage ; les terminaux dont la requête n'a pu être traitée vont alors attendre durant une période de temporisation préprogrammée, puis tenter à nouveau de s'enregistrer, comme dans l'art antérieur.

Dans le présent mode de réalisation de l'invention, après réception par le réseau d'une requête d'enregistrement initial qu'il est capable de traiter, la fonction "REGISTRAR" du serveur I/S-CSCF 22 calcule, pour la période de rafraîchissement d'enregistrement, une valeur aléatoire comprise entre une valeur minimale PREIₘᵢₙ et une valeur maximale PREIₘₐₓ, et le serveur I/S-CSCF 22 en notifie le terminal émetteur.

Lorsqu'ensuite, avant l'expiration de cette période de rafraîchissement d'enregistrement qui lui a été notifiée, le terminal émet une requête de rafraîchissement d'enregistrement, le réseau répond à cette requête en prescrivant au terminal une période PRE de rafraîchissement d'enregistrement égale à la valeur prévue pour le fonctionnement normal du réseau.

Après la fin d'une panne, les requêtes d'enregistrement initial traitées par le réseau peuvent émaner :
● de terminaux qui se sont connectés juste après la panne (et n'ont donc subi en rien les effets de la panne), ou
● de terminaux qui étaient connectés avant la panne, et dont l'enregistrement a été perdu à cause de la panne, ou encore
● de terminaux qui étaient connectés avant la panne, et dont l'enregistrement n'a pas été perdu au niveau du coeur de réseau (dans l'exemple considéré, le coeur de réseau est représenté par le serveur I/S-CSCF 22), mais qui ont émis un message quelconque qui n'a pu, à cause de la panne, être transmis au coeur de réseau par un équipement d'accès au réseau (dans l'exemple considéré, l'équipement d'accès au réseau est représenté par le P-CSCF 21) ; en effet, dans ce dernier cas, un tel terminal en déduit (à tort) qu'il n'est plus enregistré, et il émet une requête d'enregistrement initial à un instant antérieur à l'instant auquel il aurait normalement émis une requête de rafraîchissement d'enregistrement.
Dans les trois cas précités, le réseau détecte une nouvelle séquence d'enregistrements (terminal non enregistré précédemment, ou terminal enregistré mais émettant une requête dont l'identifiant d'enregistrement initial, habituellement appelé "*call-ID*", est différent du dernier *call-ID* stocké).

Comme illustré sur la **figure 1c**, on obtient grâce à l'invention un étalement des requêtes de rafraîchissement d'enregistrement, puisque, respectivement pour chaque terminal qui s'est enregistré après la fin de la panne (temps t = 0), le premier rafraîchissement intervient à un temps situé aléatoirement entre t = PREIₘᵢₙ et t = PREIₘₐₓ, et les rafraîchissements suivants à des temps postérieurs d'un multiple de PRE par rapport au premier rafraîchissement respectif. Sur cette figure 1c, on a pris, à titre d'exemple, PREIₘᵢₙ = PRE et PREIₘₐₓ = 2·PRE, avec PRE égale à la durée "Expires" mentionnée ci-dessus.

On peut en outre, optionnellement, appliquer une méthode analogue à tel ou tel type de souscription disponible (ou, optionnellement, à plusieurs types agrégés). Autrement dit, pour un type de souscription déterminé et pour un terminal respectif, le premier rafraîchissement de souscription interviendra à un temps situé aléatoirement entre t = PRSIₘᵢₙ et t = PRSIₘₐₓ, et les rafraîchissements suivants à des temps postérieurs d'un multiple de PRS par rapport au premier rafraîchissement respectif ; ici, PRS est, pour ce type de souscription, la période de rafraîchissement prévue pour le fonctionnement normal du réseau. On pourra par exemple prendre PRSIₘᵢₙ = PRS et PRSIₘₐₓ = 2·PRS.

Concernant la mise en oeuvre de l'invention, on peut envisager les deux variantes suivantes.

Selon la première variante, le procédé selon l'invention fonctionne de manière permanente (en prévision d'une éventuelle panne). Dans cette variante, on applique donc le procédé selon l'invention, notamment, à tout enregistrement initial.

Selon la seconde variante, le procédé selon l'invention ne fonctionne que pour une durée prédéterminée suite à la fin d'une panne. Cette durée prédéterminée pourrait par exemple être prise égale à la plus grande valeur dans l'ensemble des valeurs maximales PREIₘₐₓ et PRSIₘₐₓ pour les divers types de souscription disponibles. Après l'expiration de cette durée prédéterminée, le réseau prescrit d'emblée aux terminaux émetteurs d'une requête d'enregistrement initial une période de rafraîchissement d'enregistrement égale à la valeur normale PRE.

On notera à cet égard qu'il existe dans l'état de l'art divers moyens pour permettre à un noeud de détecter la panne d'un autre noeud du réseau. De tels moyens peuvent par exemple s'appuyer sur la détection de l'absence de réception de messages de signalisation pendant une certaine période de temps entre les deux noeuds. Pour effectuer une telle détection, il est notamment possible de s'appuyer sur les messages de signalisation envoyés par les terminaux et normalement relayés par les noeuds, ou sur l'émission de messages de signalisation échangés uniquement entre deux noeuds, ou encore sur une combinaison de ces deux méthodes. La détection de la fin de la panne s'appuie quant à elle sur la réception de messages de signalisation provenant du noeud précédemment considéré comme étant en panne.

La mise en oeuvre de l'invention au sein des noeuds du réseau de télécommunications (plus précisément, les serveurs P-CSCF et I/S-CSCF dans l'exemple de réalisation décrit ci-dessus) peut être réalisée au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre du procédé de régulation du trafic selon l'invention.

En effet, l'invention vise aussi un programme d'ordinateur téléchargeable depuis un réseau de communication comprenant des instructions pour l'exécution des étapes d'un procédé de régulation du trafic selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ("*floppy disc*" en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution du procédé de régulation du trafic selon l'invention.

## Revendications

1. Procédé de régulation du trafic dans un réseau de télécommunications, comprenant les étapes suivantes :
- suite à la réception par le réseau d'une requête d'enregistrement initial, et dans le cas où le réseau est capable de traiter ladite requête d'enregistrement initial, il prescrit au terminal émetteur de la requête une période de rafraîchissement d'enregistrement choisie aléatoirement entre une valeur minimale PREIₘᵢₙ, et une valeur maximale PREIₘₐₓ, prédéterminées, et
- suite à la réception par le réseau d'une requête de rafraîchissement d'enregistrement, il prescrit au terminal émetteur de la requête une période de rafraîchissement d'enregistrement égale à la valeur (PRE) prévue pour le fonctionnement normal du réseau.

2. Procédé de régulation du trafic selon la revendication 1, **caractérisé en ce que** ladite valeur minimale PREIₘᵢₙ, est égale à ladite valeur normale PRE, et ladite valeur maximale PREIₘₐₓ, est égale au double de cette valeur normale.

3. Procédé de régulation du trafic selon la revendication 1 ou la revendication 2, comprenant en outre les étapes suivantes :
- suite à la réception par le réseau d'une requête de souscription initiale d'un certain type, et dans le cas où le réseau est capable de traiter ladite requête de souscription initiale, il prescrit au terminal émetteur de la requête une période de rafraîchissement de souscription choisie aléatoirement entre une valeur minimale PRSIₘᵢₙ, et une valeur maximale PRSIₘₐₓ, prédéterminées, et
- suite à la réception par le réseau d'une requête de rafraîchissement de souscription, il prescrit au terminal émetteur de la requête une période de rafraîchissement de souscription dudit type égale à la valeur PRS, prévue pour le fonctionnement normal du réseau.

4. Procédé de régulation du trafic selon la revendication 3, **caractérisé en ce que** ladite valeur minimale PRSIₘᵢₙ, est égale à ladite valeur normale PRS, et ladite valeur maximale PRSIₘₐₓ, est égale au double de cette valeur normale.

5. Système de régulation du trafic dans un réseau de télécommunications, possédant des moyens pour :
- suite à la réception par le réseau d'une requête d'enregistrement initial, et dans le cas où le réseau est capable de traiter ladite requête d'enregistrement initial, prescrire au terminal émetteur de la requête une période de rafraîchissement d'enregistrement choisie aléatoirement entre une valeur minimale PREIₘᵢₙ, et une valeur maximale PREIₘₐₓ, prédéterminées, et
- suite à la réception par le réseau d'une requête de rafraîchissement d'enregistrement, prescrire au terminal émetteur de la requête une période de rafraîchissement d'enregistrement égale à la valeur PRE, prévue pour le fonctionnement normal du réseau.

6. Système de régulation du trafic selon la revendication 5, **caractérisé en ce que** ladite valeur minimale PREIₘᵢₙ, est égale à ladite valeur normale PRE, et ladite valeur maximale PREIₘₐₓ, est égale au double de cette valeur normale.

7. Système de régulation du trafic selon la revendication 5 ou la revendication 6, comprenant en outre des moyens pour :
- suite à la réception par le réseau d'une requête de souscription initiale d'un certain type, et dans le cas où le réseau est capable de traiter ladite requête de souscription initiale, prescrire au terminal émetteur de la requête une période de rafraîchissement de souscription choisie aléatoirement entre une valeur minimale PRSIₘᵢₙ, et une valeur maximale PRSIₘₐₓ, prédéterminées, et
- suite à la réception par le réseau d'une requête de rafraîchissement de souscription, prescrire au terminal émetteur de la requête une période / de rafraîchissement de souscription dudit type égale à la valeur PRS, prévue pour le fonctionnement normal du réseau.

8. Système de régulation du trafic selon la revendication 7, **caractérisé en ce que** ladite valeur minimale PRSIₘᵢₙ, est égale à ladite valeur normale PRS, et ladite valeur maximale PRSIₘₐₓ, est égale au double de cette valeur normale.

9. Système de régulation du trafic selon l'une quelconque des revendications 5 à 8, **caractérisé en ce que** l'infrastructure dudit réseau de télécommunications est de type IMS, et que lesdits moyens sont compris dans une fonction "REGISTRAR".

10. Moyen de stockage de données inamovible, ou partiellement ou totalement amovible, comportant des instructions de code de programme informatique pour l'exécution des étapes d'un procédé de régulation du trafic selon l'une quelconque des revendications 1 à 4.

11. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de régulation du trafic selon l'une quelconque des revendications 1 à 4, lorsqu'il est exécuté sur un ordinateur.

## Claims

1. Method for regulating traffic in a telecommunications network, comprising the following steps:
- following the receipt by the network of an initial registration request, and if the network is capable of processing said initial registration request, it prescribes to the terminal sending the request a registration refresh period chosen at random between a predetermined minimum value PREIₘᵢₙ and a predetermined maximum value PREIₘₐₓ, and
- following the receipt by the network of a registration refresh request, it prescribes to the terminal sending the request a registration refresh period equal to the value (PRE) provided for the normal operation of the network.

2. Method for regulating traffic according to Claim 1, **characterized in that** said minimum value PREIₘᵢₙ is equal to said normal value PRE, and said maximum value PREIₘₐₓ is equal to double this normal value.

3. Method for regulating traffic according to Claim 1 or Claim 2, also comprising the following steps:
- following the receipt by the network of an initial request for a subscription of a certain type, and if the network is capable of processing said initial subscription request, it prescribes to the terminal sending the request a subscription refresh period chosen at random between a predetermined minimum value PRSIₘᵢₙ and a predetermined maximum value PRSIₘₐₓ, and
- following the receipt by the network of a subscription refresh request, it prescribes to the terminal sending the request a refresh period for a subscription of said type equal to the value PRS provided for the normal operation of the network.

4. Method for regulating traffic according to Claim 3, **characterized in that** said minimum value PRSIₘᵢₙ is equal to said normal value PRS, and said maximum value PRSIₘₐₓ is equal to double this normal value.

5. System for regulating traffic in a telecommunications network, having means for:
- following the receipt by the network of an initial registration request, and if the network is capable of processing said initial registration request, prescribing to the terminal sending the request a registration refresh period chosen at random between a predetermined minimum value PREIₘᵢₙ and a predetermined maximum value PREIₘₐₓ, and
- following the receipt by the network of a registration refresh request, prescribing to the terminal sending the request a registration refresh period equal to the value PRE provided for the normal operation of the network.

6. System for regulating traffic according to Claim 5, **characterized in that** said minimum value PREIₘᵢₙ is equal to said normal value PRE, and said maximum value PREIₘₐₓ is equal to double this normal value.

7. System for regulating traffic according to Claim 5 or Claim 6, also comprising means for:
- following the receipt by the network of an initial request for a subscription of a certain type, and if the network is capable of processing said initial subscription request, prescribing to the terminal sending the request a subscription refresh period chosen at random between a predetermined minimum value PRSIₘᵢₙ and a predetermined maximum value PRSIₘₐₓ, and
- following the receipt by the network of a subscription refresh request, prescribing to the terminal sending the request a refresh period for a subscription of said type equal to the value PRS provided for the normal operation of the network.

8. System for regulating traffic according to Claim 7, **characterized in that** said minimum value PRSIₘᵢₙ is equal to said normal value PRS and said maximum value PRSIₘₐₓ is equal to double this normal value.

9. System for regulating traffic according to any one of Claims 5 to 8, **characterized in that** the infrastructure of said telecommunications network is of the IMS type, and that said means are included in a "REGISTRAR" function.

10. Means for data storage that is irremovable or partially or totally removable, comprising computer program code instructions for the execution of the steps of a method for regulating traffic according to any one of Claims 1 to 4.

11. Computer program that can be downloaded from a communication network and/or stored on a medium that can be read by computer and/or can be executed by a microprocessor, **characterized in that** it comprises instructions for the execution of the steps of a method for regulating traffic according to any one of Claims 1 to 4, when it is executed on a computer.

## Patentansprüche

1. Verfahren zur Regelung des Verkehrs in einem Telekommunikationsnetz, das die folgenden Schritte enthält:
- nach dem Empfang einer Erstregistrierungsanforderung durch das Netz, und in dem Fall, in dem das Netz die Erstregistrierungsanforderung verarbeiten kann, schreibt es dem die Anforderung sendenden Endgerät eine Periode der Registrierungsaktualisierung vor, die zufällig zwischen einem minimalen Wert PREIₘᵢₙ und einem maximalen Wert PREIₘₐₓ gewählt wird, die vorbestimmt sind, und
- nach dem Empfang einer Registrierungsaktualisierungsforderung durch das Netz schreibt es dem die Anforderung sendenden Endgerät eine Periode der Registrierungsaktualisierung gleich dem Wert (PRE) vor, der für den normalen Betrieb des Netzes vorgesehen ist.

2. Verkehrsregelungsverfahren nach Anspruch 1, **dadurch gekennzeichnet, dass** der minimale Wert PREIₘᵢₙ gleich dem normalen Wert PRE ist, und der maximale Wert PREIₘₐₓ gleich dem Doppelten dieses normalen Werts ist.

3. Verkehrsregelungsverfahren nach Anspruch 1 oder Anspruch 2, das außerdem die folgenden Schritte enthält:
- nach dem Empfang einer Erstanforderung für ein Abonnement eines bestimmten Typs durch das Netz, und in dem Fall, in dem das Netz die Erstabonnementanforderung verarbeiten kann, schreibt es dem die Anforderung sendenden Endgerät eine Periode der Abonnementaktualisierung vor, die zufällig zwischen einem minimalen Wert PRSIₘᵢₙ und einem maximalen Wert PRSIₘₐₓ gewählt wird, die vorbestimmt sind, und
- nach dem Empfang einer Abonnementaktualisierungsanforderung durch das Netz schreibt es dem die Anforderung sendenden Endgerät eine Periode der Aktualisierung für ein Abonnement des bestimmten Typs vor, die gleich dem für den normalen Betrieb des Netzes vorgesehenen Wert PRS ist.

4. Verkehrsregelungsverfahren nach Anspruch 3, **dadurch gekennzeichnet, dass** der minimale Wert PRSIₘᵢₙ gleich dem normalen Wert PRS ist, und der maximale Wert PRSIₘₐₓ gleich dem Doppelten dieses normalen Werts ist.

5. System zur Regelung des Verkehrs in einem Telekommunikationsnetz, das Einrichtungen besitzt, um:
- nach dem Empfang einer Erstregistrierungsanforderung durch das Netz, und in dem Fall, in dem das Netz die Erstregistrierungsanforderung verarbeiten kann, dem die Anforderung sendenden Endgerät eine Periode der Registrierungsaktualisierung vorzuschreiben, die zufällig zwischen einem minimalen Wert PREIₘᵢₙ und einem maximalen PREIₘₐₓ ausgewählt wird, die vorbestimmt sind, und
- nach dem Empfang einer Registrierungsaktualisierungsanforderung durch das Netz dem die Anforderung sendenden Endgerät eine Periode der Registrierungsaktualisierung vorzuschreiben, die gleich dem für den normalen Betrieb des Netzes vorgesehenen Wert PRE ist.

6. Verkehrsregelungssystem nach Anspruch 5, **dadurch gekennzeichnet, dass** der minimale Wert PREIₘᵢₙ gleich dem normalen Wert PRE ist, und dass der maximale Wert PREIₘₐₓ gleich dem Doppelten dieses normalen Werts ist.

7. Verkehrsregelungssystem nach Anspruch 5 oder Anspruch 6, das außerdem Einrichtungen enthält, um:
- nach dem Empfang einer Erstanforderung für ein Abonnement eines bestimmten Typs durch das Netz, und in dem Fall, in dem das Netz die Erstabonnementanforderung verarbeiten kann, dem die Anforderung sendenden Endgerät eine Periode der Abonnementaktualisierung vorzuschreiben, die zufällig zwischen einem minimalen Wert PRSIₘᵢₙ und einem maximalen Wert PRSIₘₐₓ gewählt wird, die vorbestimmt sind, und
- nach dem Empfang einer Abonnementaktualisierungsanforderung durch das Netz dem die Anforderung sendenden Endgerät eine Periode der Aktualisierung für ein Abonnement des bestimmten Typs vorzuschreiben, die gleich dem für den normalen Betrieb des Netzes vorgesehenen Wert PRS ist.

8. Verkehrsregelungssystem nach Anspruch 7, **dadurch gekennzeichnet, dass** der minimale Wert PRSIₘᵢₙ gleich dem normalen Wert PRS ist, und der maximale Wert PRSIₘₐₓ gleich dem Doppelten dieses normalen Werts ist.

9. Verkehrsregelungssystem nach einem der Ansprüche 5 bis 8, **dadurch gekennzeichnet, dass** die Infrastruktur des Telekommunikationsnetzes von der Art IMS ist, und dass die Einrichtungen in einer Funktion "REGISTRAR" enthalten sind.

10. Datenspeichereinrichtung, die nicht entfernbar oder teilweise oder ganz entfernbar ist, die EDV-Programmcodeanweisungen für die Ausführung der Schritte eines Verkehrsregelungsverfahrens nach einem der Ansprüche 1 bis 4 aufweist.

11. Computerprogramm, das von einem Kommunikationsnetz heruntergeladen und/oder auf einem computerlesbaren Träger gespeichert und/oder von einem Mikroprozessor ausgeführt werden kann, **dadurch gekennzeichnet, dass** es Anweisungen zur Ausführung der Schritte eines Verkehrsregelungsverfahrens nach einem der Schritte 1 bis 4 enthält, wenn es auf einem Computer ausgeführt wird.
